# EUROPEAN PATENT APPLICATION

(11) **EP 4 838 924 A1**
(43) Date of publication of application: **11.11.2026**
(21) Application number: 25174610.3
(22) Date of filing: 06.05.2025
(51) Int. Cl.: H04W 12/08, H04W 12/50, H04W 12/73, H04W 52/02, H04W 84/12

(54) **METHOD FOR CONTROLLING A GUEST ACCESS TO A WLAN ROUTER AND WLAN ROUTER**

(71) Applicant: Deutsche Telekom AG, 53113 Bonn (DE)
(72) Inventor: STEPANEK, Nicolas Walter, 64385 Reichelsheim (DE); THIES, Emil, 47166 Duisburg (DE)
(74) Representative: Blumbach · Zinngrebe Patentanwälte PartG mbB

(57) **Abstract**

A method for controlling a guest access to a WLAN router (100) is provided, which comprises a primary WLAN access point (130) and a guest WLAN access point (160). The method comprises the following steps:
a) Activating the guest WLAN access point (160);
b) Entering, by a guest, the second credentials received from a primary person into a guest WLAN client (30);
c) Transmitting the second credentials from the guest WLAN client (30) to the WLAN router (100) and logging in of the guest to the guest WLAN access point (160) in response to the second credentials received;
d) Deactivating, by the WLAN router (100), the guest WLAN access point (160) in response to a predetermined event;
e) Transmitting a message from the guest WLAN client to the WLAN router and reactivating, by the WLAN router (100), the guest WLAN access point (160) in response to the message received from the guest WLAN client.

## Description

### Technical Field of the Invention

The present invention relates to a method for controlling a guest access to a wireless local area network, WLAN, router, which is preferably installed in a building or flat of a private person and further relates to such a WLAN router.

### Background of the Invention

In order to enhance mobility of electronic devices in a home area, the electronic devices, preferably operating as WLAN clients, may be wireless connected via a Wireless Local Area Network, WLAN, which may implement for example a standard of the IEEE 802.11 family. It is to be noted that such a WLAN is commonly called Wi-Fi. The coordination of the WLAN-capable electronic devices within the home area is taken over by a Wireless Access Point, WAP, which is preferably implemented in a WLAN router belonging preferably to a primary person, e.g. the homeowner. **In** practice such a WLAN router can be connected to the Internet through a wired xDSL (Digital Subcscriber Line) interface. Since the number of users of mobile computing devices, e.g. smartphones, is growing faster and faster the need arose to provide Internet access for guests and friends via the homeowner's WAP.

For example, US 11,019,560 B2 discloses a method for selective cloud-based SSID (Service Set Identifier) steering for allowing different levels of access for wireless network friends when onboarding on Wi-Fi networks.

It is an object of the present invention, to provide a method for controlling a guest access to a WLAN router and a WLAN router for controlling a guest access, which facilitate for the owner of the WLAN router the management of a guest access to its WLAN router, in particular by reducing the owner's co-operation.

### Summary of the Invention

The technical problem mentioned above is solved by the steps of claim 1.

According to a first aspect, a method for controlling a guest access to a wireless local area network, WLAN, router is provided, wherein a primary WLAN access point and a guest WLAN access point are implemented in the WLAN router. The primary WLAN access point is activated and the guest WLAN access point is deactivated, wherein first credentials only associated with the primary WLAN access point and second credentials only associated with the guest WLAN access point are stored in the WLAN router. The method comprises preferably the following steps:
a) Activating the guest WLAN access point;
b) Entering, by a guest, the second credentials received from a primary person into a guest WLAN client;
c) Transmitting the second credentials from the guest WLAN client to the WLAN router and logging in of the guest and the guest WLAN client, respectively, to the guest WLAN access point in response to the second credentials received;
d) Deactivating, by the WLAN router, the guest WLAN access point in response to a predetermined event, in particular when the guest WLAN access point has not been used during a predetermined time after its activation in step a);
e) Transmitting a message from the guest WLAN client to the WLAN router and reactivating, by the WLAN router, the guest WLAN access point, deactivated in step d) in response to the message received from the guest WLAN client.

Preferably, the message transmitted in step e) comprises the second credentials.

Preferably, after performing step e) the second credentials are transmitted again from the guest WLAN client to the WLAN router and the guest and the guest WLAN client, respectively, is logged in again to the guest WLAN access point in response to the second credentials received.

A predetermined event may be for example:
- The expiration of a predetermined time limit,
- the detection that the connection between the guest WLAN client and the guest WLAN access point has not been used during a predetermined time,
- a withdrawal of the guest's access right to the guest WLAN access point,
- an information that the guest WLAN client has left the wireless coverage of the guest WLAN access point, or
- a smart home event generated by sensors or calculated by a smart home controlling unit.

Once the guest has been logged in at step c) the guest WLAN access point and the guest WLAN client can communicate with each other via a wireless connection.

Advantageously, no co-operation of the primary person, who is preferably the primary user or owner of the WLAN router, is needed to deactivate and reactivate the guest WLAN access point of the WLAN router. These operation steps are automatically performed by the WLAN router itself.

It is to be noted that the term "primary person" is not limited to a single person. Several persons, for example a complete family, can operate as a primary person. It should be noted, that a primary person's WLAN client is wirelessly connected to the primary WLAN access point of the WLAN router. In particular, the primary person has access to the WLAN router setup, e.g. to manage and configure the WLAN router and for example to activate the guest WLAN access point- . This could be also happen by a the primary person's WLAN client or a primary person's computing device which is connected to the WLAN router by cable.

Preferably, the method may further comprise the step:
f) Deactivating, by the WLAN router, the guest WLAN access point, when the guest WLAN access point has not been used during a predetermined time after its reactivation in step e).

Preferably, steps e) and f) are repeated. By doing so, each time the guest returns to the private person of the WLAN router, the guest WLAN client will automatically be connected to the guest WLAN access point without any co-operation of the primary person.

Preferably, the first credentials may include a first password and a first service set identifier, SSID, assigned to the primary WLAN access point and the second credentials may include a second password and a second SSID assigned to the guest WLAN access point, wherein the first SSID and the second SSID and the first password and the second password are different. In practice, the first and second SSID are assigned by a network operator, e.g. the primary person, to the respective WLAN access point.

In order to increase the security by identifying the guest WLAN device by the WLAN router, a Media-Access-Control, MAC, address assigned to the guest WLAN client is transmitted in step c) by the guest WLAN client together with the second credentials to the WLAN router and the MAC address of the guest WLAN client is stored in the WLAN router. Furthermore, step e) comprises the step of checking by the WLAN router whether the MAC address of the guest WLAN client transmitted in step c) is already stored in the WLAN router, i.e. matches a MAC address stored in the WLAN router. If yes, reactivating, by the WLAN router, the guest WLAN access point.

According to a preferred aspect, step e) comprises the following steps:
- transmitting the message, which preferably includes at least the second credentials, from the guest WLAN client to the primary WLAN access point of the WLAN router;
- in response to the message detecting, by the WLAN router, that the guest is not allowed to get access to the primary WLAN access point;
- checking, by the WLAN router in response to the message, whether the guest is allowed to get access to the guest WLAN access point; and, if yes,
- reactivating, by the WLAN router, the guest WLAN access point.

According to an alternative aspect, step e) comprises the following steps:
- transmitting by the guest WLAN client the message which includes the second SSID to the WLAN router in order to get access to the guest WLAN access point, which, however, is currently deactivated;
- checking by the WLAN router in response to the message whether the second SSID included in the message matches the second credentials stored in the WLAN router; and, if yes,
- reactivating, by the WLAN router, the guest WLAN access point.

According to a further alternative aspect, a predetermined password is given to the guest, wherein step c) comprises the following steps:
- transmitting the second credentials including the predetermined password from the guest WLAN client to the primary WLAN access point of the WLAN router;
- roaming, by the WLAN router, in response to the predetermined password the guest WLAN client to the guest WLAN access point, and
- logging in the guest to the guest WLAN access point by the WLAN router by using the second credentials, and wherein
step e) comprises the following steps:
- transmitting the message including the second credentials which includes the predetermined password from the guest WLAN client to the primary WLAN access point of the WLAN router,
- checking, by the WLAN router, the second credentials including the predetermined password to determine, whether the guest WLAN client is allowed to get access to the guest WLAN access point, if yes,
- reactivating, by the WLAN router, the deactivated guest WLAN access point, and
- roaming, by the WLAN router, in response to the predetermined password the guest WLAN client to the activated guest WLAN access point.

In order to inform the primary person of the current state of the guest WLAN access point, the method preferably further comprises the steps:
transmitting, if the guest WLAN client is connected to the guest WLAN access point, a first information from the WLAN router to the WLAN client of the primary person indicating that the guest WLAN client is connected to the guest WLAN access point, or
transmitting, if the guest WLAN access point has been deactivated, a second information from the WLAN router to the WLAN client of the primary person indicating that the guest WLAN access point has been deactivated, or
transmitting, if the guest WLAN access point has been reactivated, a third information from the WLAN router to the WLAN client of the primary person indicating that the guest WLAN access point has been reactivated.

The above mention technical problem is also solved by the features of claim 10.

According to a preferred aspect a WLAN router for controlling a guest access is provided, wherein the WLAN router comprises preferably the following features:
a primary WLAN access point,
a guest WLAN access point,
a memory configured to store first credentials only associated with the primary WLAN access point, second credentials only associated with the guest WLAN access point and a plurality of instructions, and
a control unit that is configured to cause when executing the instructions stored in the memory the WLAN router to execute the method as set forth above.

### Brief Description of the Drawings

Preferred embodiments are illustrated below in connection with the accompanying drawings, in which:
- Fig. 1: depicts a block diagram of an exemplary WLAN-based communication system installed in a home at a home environment,
- Fig. 2: a sequence diagram illustrating first exemplary interactions between components of the WLAN-based communication system shown in FIG. 1,
- Fig. 3: a sequence diagram illustrating second exemplary interactions between components of the WLAN-based communication system shown in FIG. 1, and
- Fig. 4: a sequence diagram illustrating third exemplary interactions between components of the WLAN-based communication system shown in FIG. 1.

### Detailed Description of the Invention

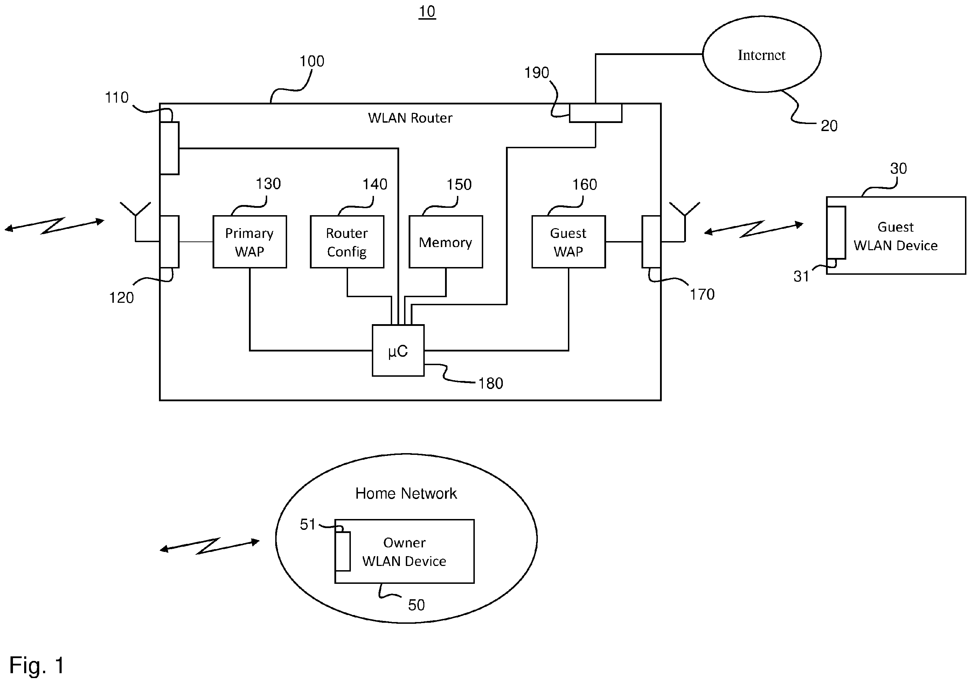

Fig. 1 shows a block diagram of an exemplary WLAN-based communication system 10, which is preferably installed in a home environment, e.g. in a single-family house or in a flat. It should be noted that the term Wi-Fi can be used instead of the acronym WLAN (standing for Wireless Local Area Network). The WLAN-based communication network 10 preferably implements a WLAN architecture according to a standard of the IEEE 802.11 family. The WLAN-based communication system 10 comprises a WLAN router 100, a primary wireless access point (WAP) 130 and a guest wireless access point (WAP) 160 both implemented in the WLAN router 100 and a home network 40, which may include at least one WLAN client 50, i.e. a WLAN-capable device which is configured to communicate with a wireless access point, e.g. the primary WAP 130 via an established wireless connection. The WLAN client 50 is herein also referred to as the owner WLAN device. The home network 40 can further comprise electronic devices such as a printer and/or computerized devices, which can be interconnected via a LAN network which in turn can be connected to a wired interface 110 of the WLAN router 100. In particular, the person, who is authorized to manage and/or configure the WLAN router 100 is called a primary person. The primary person can be the owner of the WLAN router 100. Preferably, a primary person is a person using a WLAN client which is wirelessly connected to the primary WAP 130. It is to be noted, that several persons can operate as a primary person. The primary wireless access point 130, shortly called herein a primary WAP, operates as a central base station 130 within the WLAN architecture. The WLAN client 50 can be a cell phone, a PC, a tablet etc. In the present exemplary case the WLAN client 50 is a cell phone, e. g. a smartphone which may belong to the owner of the WLAN router 100. It is to be noted, that the primary WAP 130 and the owner WLAN device 50 comprise each a wireless interface 120 and 51, respectively. Preferably, the wireless interfaces 120 and 51 are each implemented as an antenna.

In order to enable a visitor or guest access to the WLAN router 100 and a public data communication network 20, respectively, without getting access to the owner's home network 40 or to network devices connected thereto the guest WAP 160 used. Similar to the primary WAP 130 the guest WAP 160 comprises a wireless interface 170, which is preferably implemented as an antenna. Using the guest WAP 160 a guest can get access via the WLAN router 100 to the public data communication network 20, which can be the Internet, without compromising the security of personal data, such as family photos or sensitive home office documents stored in a network device (note shown) of the home network 40.

A wired interface 190, for example a xDSL (Digital Subscriber Line)-based interface, can be implemented at the WLAN router 100 to connect the WLAN router 100 to the public data communication network, e.g. the internet 20. With other words: The WLAN router 100 is configured to establish a separate, isolated internet connection for a guest by using the guest WAP 160. This may be achieved in that the primary WAP 130 and the guest WAP 160 use different IP addresses.

It is assumed, that the WLAN router 100 has already been configured by the owner and a connection to the Internet 20 has been established via the wired interface 190. For example the configuration of the WLAN router 100 and the Internet settings can be executed by the owner of the WLAN router 100 using its smartphone 50 or any computerized device which is connectable via a LAN cable (not shown) to the wired interface 110 of the WLAN router 100. Router configuration data are stored on the WLAN router 100, for example in a memory 140. The router configuration data preferably comprises first credentials only associated with the primary WLAN access point 130 and second credentials only associated with the guest WLAN access point 160. The first credentials may include a predetermined SSID (Service Set Identifier), i.e. a name, which identifies the primary WAP 130, whereas second credentials may include a different predetermined SSID (Service Set Identifier), i.e. a name, which identifies the guest WAP 160. Preferably, the first credentials and the second credentials can each contain a different password to allow a user to get access to the primary WAP 130 or the guest WAP 160. In addition, a unique address, a so-called Medium-Access-Control (MAC)-address is associated with the primary WAP 130 and the guest WAP 160, respectively. When activated the primary WAP 130 and the guest WAP 160 are each broadcasting its respective SSID and its respective MAC address.

The WLAN router 100 further comprises a control unit 180, e.g. a microprocessor or microcontroller, which is configured to monitor and control the operation of the WLAN router 100 and the primary WAP 130 and/or the guest WAP 160, respectively. Therefore, a plurality of instruction are stored on the WLAN router 100, for example in memory 140 or a separate memory of the WLAN router 100.

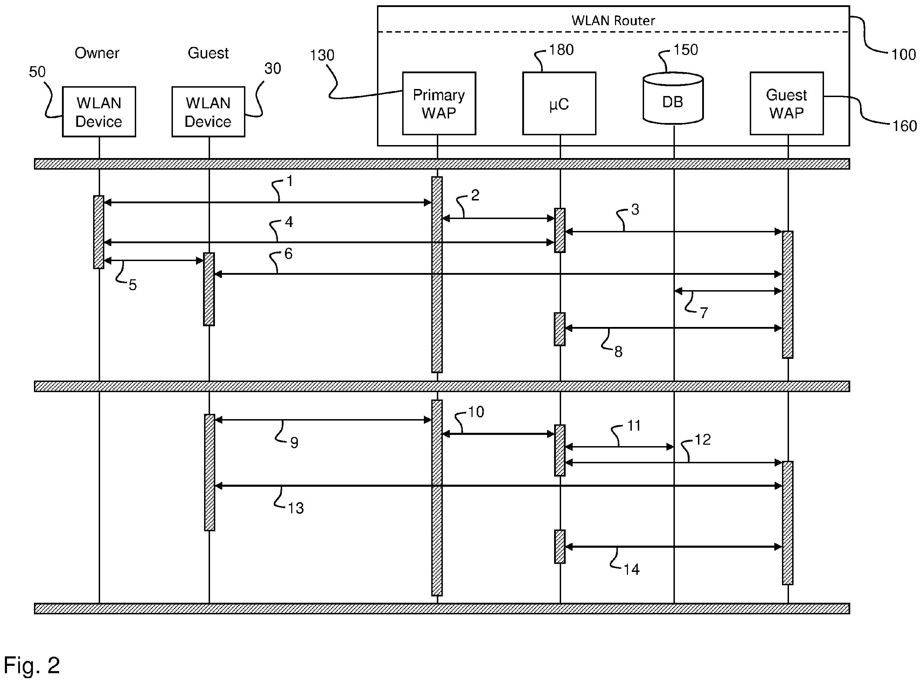

In the following, the operation of the WLAN-based communication system 10 and in particular of the WLAN router 100 is described in more detail in connection with Figs. 2-4.

It is assumed, that the primary WAP 130 is currently activated and broadcasts preferably periodically beacon packets or frames including the SSID and MAC address of the primary WAP 30 as long as it is activated. Furthermore, the smartphone 50 is configured to communicate via an established wireless connection with the primary WAP 130 and the WLAN router 100, respectively, by using the MAC address of the primary WAP 130. The guest WAP 160 is currently deactivated. In addition, it is assumed that a guest using a guest WLAN client 30 is just visiting the owner of the WLAN router 100 and wants to log in to the WLAN router 100 and the guest WAP 160 for the first time to get access to the Internet 20. The guest WLAN client 30 is for example a WLAN-capable cell phone having a wireless interface 31, which supports preferably a WLAN standard of the IEEE 802.11 family.

Now a first scenario is illustrated in connection with Fig. 2.

In order to allow the guest of the guest WLAN device 30 access to the Internet 20 via the WLAN router 100 the guest WAP 160 has to be activated. To this end the owner can for example use the smartphone 50 to communicate with the WLAN router 100 via the primary WAP 130. According to a preferred implementation, the smartphone 50 is configured to send in step 1 an activation message to the primary WAP 130 which forwards in step 2 the activation message to the microcontroller 180. The activation message may include the MAC address and/or the SSID of the guest WAP 160. The microcontroller 180 is configured to activate in response to the activation message the guest WAP 160 by checking whether the MAC address and/or the SSID matches the router configuration data stored in memory 140. If yes, the microcontroller 180 activates in step 3 the guest WAP 160, which now starts broadcasting periodically its SSID and MAC address. Preferably, the microcontroller 180 causes the WLAN router 100 to send in step 4 a confirmation message via the primary WAP 130 to the smartphone 50 confirming that the guest WAP 160 is now activated. In step 5 the owner hands over the second credentials associated with the guest WAP 160 to the guest. To this end the second credentials can be transferred in a QR code from the smartphone 50 to the guest WLAN device 30. Preferably, the second credentials include the SSID and the password associated with the guest WAP 160. In step 6 the second credentials are used to log in the guest to the guest WAP 160. Therefore, the guest WLAN device 30 is preferably configured to transmit a WLAN frame including for example the MAC address of the guest WLAN device 30, the MAC address of the guest WAP 160 and the second credentials, to the guest WAP 160. Once the guest is logged in to the guest WAP 160 a wireless connection is established between the guest WLAN device 30 and the guest WAP 160. Furthermore, the microcontroller 180 can be optionally configured to cause in step 7 the WLAN router 100 when executing the stored instructions to store the MAC address of the guest WLAN device 30 included in the received WLAN frame in a memory 150 implemented in the WLAN router 100. The microcontroller 180 is further configured to deactivate or switch off the guest WAP 160 in step 8 in response to a predetermined event, for example when the guest WAP 160 has not been used during a predetermined time after its activation. For example the guest drives home again and thus the guest WAP 160 is not used during a predetermined time period of 12 hours.

A predetermined event may be, for example, the expiration of a predetermined time limit, the detection that the connection between the guest WLAN client 30 and the guest WLAN access point 160 has not been used during a predetermined time, a withdrawal of the guest's access right to the guest WLAN access point 160, or an information that the guest WLAN client 30 has left the wireless coverage of the guest WLAN access point 160.

Once the guest returns to the owner and would like to regain access to the WLAN router 100 and the Internet 20, respectively, the access can be granted automatically without any activities of the owner itself.

Since the guest WAP 160 has been deactivated only the primary WAP 130 broadcasts periodically beacon frames including its SSID and MAC address. The guest WLAN device 30 is configured to passively scan beacon frames from the primary WAP 130 and to transmit in step 9 a WLAN frame including a message which, for example comprises the second credentials, the MAC address of the guest WLAN device 30 and the MAC address of the primary WAP 130 to the primary WAP 130. The microcontroller 180 is configured to cause the WLAN router 100 to check in step 10 whether the guest and the guest WLAN device 30, respectively, is allowed to get access to the primary WAP 130. In the present case the microcontroller 180 determines that the guest and the guest WLAN device 30, respectively, is not allowed to get access to the primary WAP 130 but to the guest WAP 160 because the transmitted second credentials matches the stored router configuration data stored in memory 140. Therefore, the microcontroller 180 is configured to reactivate the guest WAP 160 in step 12 and a wireless connection is established between the guest WAP 160 and the guest WLAN device 30 in step 13. In order to log in again the guest or the guest WLAN device 30 to the client WAP 160, the guest WLAN device 30 is preferably configured to re-transmit a WLAN frame including for example the MAC address of the guest WLAN device 30, the MAC address of the guest WAP 160 and the second credentials, to the guest WAP 160. Once the guest and the guest WLAN device 30, respectively, is logged in to the guest WAP 160 a wireless connection is re-established between the guest WLAN device 30 and the guest WAP 160.

In order to increase the security level the microcontroller 180 can be configured to cause when executing the stored instructions the WLAN router to check prior to the reactivation of the guest WAP 160 in step 11 whether the MAC address of the guest WLAN device 30 included in the WLAN frame matches a MAC address stored in memory 150. In this case the guest WAP 160 is only reactivated by the microcontroller 180 in step 12 if the second credentials matches the stored router configuration data and if the MAC address of the guest WLAN device 30 included in the WLAN frame matches MAC address stored in memory 150. Alternatively, the microcontroller 180 can be configured to only check whether the MAC address of the guest WLAN device 30 include in the WLAN frame matches a MAC address stored in the memory 150 and to activate the guest WAP 160 if a match is determined. Once the guest WAP 160 is reactivated a wireless connection is established between the guest WLAN device 30 and the guest WAP 160 in step 13.

Now, the microcontroller 180 is configured to deactivate or switch off the guest WAP 160 in step 14 again in response to a predetermined event, for example when the guest WAP 160 has not been used during a predetermined time after its reactivation. For example the guest drives home again and thus the guest WAP 160 is not used during a predetermined time period of 12 hours. The process of automatically deactivating and reactivating the guest WAP 160 by the microcontroller 180 and the WLAN router 100, respectively, can be repeated.

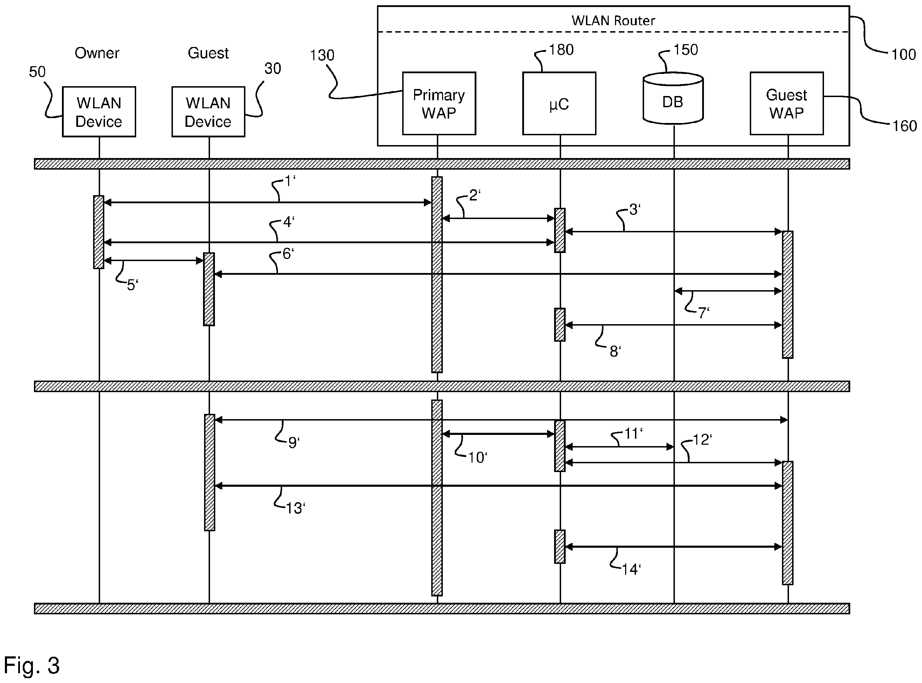

Now a second scenario is illustrated in connection with Fig. 3.

In order to allow the guest of the guest WLAN device 30 access to the Internet 20 via the WLAN router 100 the guest WAP 160 has to be activated. To this end the owner can for example use the smartphone 50 to communicate with the WLAN router 100 via the primary WAP 130. According to a preferred implementation, the smartphone 50 is configured to send in step 1 an activation message to the primary WAP 130 which in turn forwards in step 2 the activation message to the microcontroller 180. The activation message may include the MAC address and/or the SSID of the guest WAP 160. The microcontroller 180 is configured to activate in response to the activation message the guest WAP 160 by checking whether the MAC address and/or the SSID matches the router configuration data stored in memory 140. If yes, the microcontroller 180 activates in step 3 the guest WAP 160, which, however is activated as a hidden WAP and thus does not start broadcasting its SSID and MAC address. Preferably, the microcontroller 180 causes the WLAN router 100 to send in step 4 a confirmation message via the primary WAP 130 to the smartphone 50 confirming that the guest WAP 160 is now activated. In step 5 the owner hands over the second credentials associated with the guest WAP 160 to the guest. To this end the second credentials can be transferred in a QR code from the smartphone 50 to the guest WLAN device 30. Preferably, the second credentials include the SSID and the password associated with the guest WAP 160. In step 6 the second credentials are used to log in the guest to the guest WAP 160. Therefore, the guest WLAN device 30 is preferably configured to transmit a WLAN frame including for example the MAC address of the guest WLAN device 30, the MAC address of the guest WAP 160 and the second credentials to the guest WAP 160. Once the guest is logged in to the guest WAP 160 a wireless connection is established between the guest WLAN device 30 and the guest WAP 160. Furthermore, the microcontroller 180 can be optionally configured to cause in step 7 the WLAN router 100 when executing the stored instructions to store the MAC address of the guest WLAN device 30 included in the received WLAN frame in the memory 150 implemented in the WLAN router 100. The microcontroller 180 is further configured to deactivate or switch off the guest WAP 160 in step 8 in response to a predetermined event, for example when the guest WAP 160 has not been used during a predetermined time after its activation. For example the guest drives home again and thus the guest WAP 160 is not used during a predetermined time period of 12 hours.

Once the guest returns to the owner and would like to regain access to the WLAN router 100 and the Internet, respectively, the access is granted automatically without any activities of the owner itself.

Since the guest WAP 160 has been deactivated only the primary WAP 130 broadcasts periodically beacon frames including its SSID and MAC address. The guest WLAN device 30 is now configured to actively scan the beacon frames from the primary WAP 130 and to generate and broadcast, in step 9' a message, also called a probe request, which includes a predetermined broadcast address, the MAC address of the guest WLAN device 30 and the SSID of the guest WAP 160 to request the guest WAP 130 to transmit its beacon frame. The procedure of broadcasting probe request by a WLAN device is defined in a standard of the IEEE 802.11 family. The reason is, that the guest WLAN device 30 assumes that the guest WAP 130, which it used previously, is hidden.

Due to using a broadcast address, the probe request is only received by the activated primary WAP 130 which in turn forwards the probe request to the microcontroller 180. The microcontroller 180 is configured to cause in step 10' the WLAN router 100 to check the received probe request. In the present case the microcontroller 180 and the WLAN router 100, respectively, determines that the requested guest WAP 160 is deactivated but the SSID included in the probe request matches the SSID of the guest WAP 160. The microcontroller 180 is configured to reactivate in response to these results the guest WAP 160 in step 12' and thus the guest WLAN device 30 is connected again to the guest WAP 160 in step 13'. In order to log in again the guest or the guest WLAN device 30 to the client WAP 160, the guest WLAN device 30 is preferably configured to re-transmit a WLAN frame including for example the MAC address of the guest WLAN device 30, the MAC address of the guest WAP 160 and the second credentials, to the guest WAP 160. Once the guest and the guest WLAN device 30, respectively, is logged in to the guest WAP 160 a wireless connection is re-established between the guest WLAN device 30 and the guest WAP 160.

In order to increase the security level the microcontroller 180 can be configured to cause when executing the stored instructions the WLAN router to check prior to the reactivation of the guest WAP 160 in step 11' whether the MAC address of the guest WLAN device 30 included in the probe request matches a MAC address stored in memory 150. In this case the guest WAP 160 is only reactivated by the microcontroller 180 in step 12' if the second credentials matches the stored router configuration data and if the MAC address of the guest WLAN device 30 included in the probe request matches a MAC address stored in memory 150. Alternatively, the microcontroller 180 can be configured to only check in step 11' whether the MAC address of the guest WLAN device 30 include in the probe request matches a MAC address stored in the memory 150 and to activate in step 12' the guest WAP 160 if a match is determined. Once the guest WAP 160 is reactivated a wireless connection is established between the guest WLAN device 30 and the guest WAP 160 in step 13'.

Now, the microcontroller 180 is further configured to deactivate or switch off the guest WAP 160 in step 14' again in response to a predetermined event, for example when the guest WAP 160 has not been used during a predetermined time after its reactivation. For example the guest drives home again and thus the guest WAP 160 is not used during a predetermined time period of 12 hours. The process of automatically deactivating and reactivating the guest WAP 160 by the microcontroller 180 and the WLAN router 100, respectively, can be repeated.

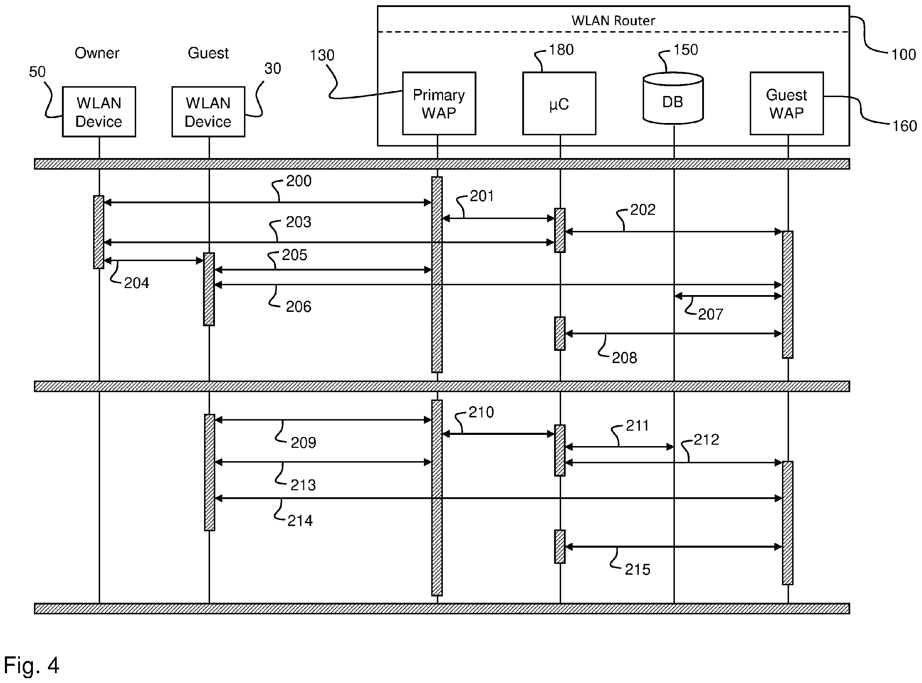

Now a third scenario is illustrated in connection with Fig. 4.

In order to allow the guest of the guest WLAN device access to the Internet 20 via the WLAN router 100 the guest WAP 160 has to be activated. To this end the owner can for example use the smartphone 50 to communicate with the WLAN router 100 via the primary WAP 130. According to a preferred implementation, the smartphone 50 is configured to send in step 200 an activation message to the primary WAP 130 which in turn forwards in step 201 the activation message to the microcontroller 180. The activation message may include the MAC address and/or the SSID of the guest WAP 160. The microcontroller 180 is configured to activate in response to the activation message the guest WAP 160 by checking whether the MAC address and/or the SSID matches the router configuration data stored in memory 140. If yes, the microcontroller 180 activates in step 202 the guest WAP 160, which now starts broadcasting periodically its SSID and MAC address . Preferably, the microcontroller 180 causes the WLAN router 100 to send in step 203 a confirmation message via the primary WAP 130 to the smartphone 50 confirming that the guest WAP 160 is now activated. In step 204 the owner hands over a predetermined password assigned to the guest WAP 160 and the SSID of the primary WAP 130 to the guest. In step 205 the guest tries to log in to primary WAP 130. Therefore, the guest WLAN device 30 is preferably configured to transmit a WLAN frame including for example the MAC address of the guest WLAN device 30, the MAC address of the primary WAP 130 and the predetermined password assigned to the guest WAP 160. The microcontroller 180 is configured to cause the WLAN router 100 to check the data included in the received WLAN frame. As a result, the WLAN router 100 determines that the guest is not allowed to log in to the primary WAP 130 because the included password is assigned to the guest WAP 160 but not to the primary WAP 130. The microcontroller 180 is further configured to cause in response to the checking result the WLAN router 100 to roam the guest WLAN device 30 to the guest WAP 160 using the SSID associated with the guest WAP 160. Now, in step 206, the guest WLAN device 30 is logged in to the guest WAP 160 using the credentials associated with the guest WAP 160, which include e.g. the predetermined password. Once the guest is logged in to the guest WAP 160 a wireless connection is established between the guest WLAN device 30 and the guest WAP 160. A default device behavior is to store those credentials as given by the homeowner and not replacing the SSID by the given roaming information. Furthermore, the microcontroller 180 can be optionally configured to cause in step 207 the WLAN router 100 and the guest WAP 160, respectively, to store the MAC address of the guest WLAN device 30 included in the received WLAN frame in the memory 150 when executing the instructions stored on the WLAN router 100. The microcontroller 180 is further configured to deactivate or switch off the guest WAP 160 in step 208 in response to a predetermined event, for example when the guest WAP 160 has not been used during a predetermined time after its activation. For example the guest drives home again and thus the guest WAP 160 is not used during a predetermined time period of 12 hours.

Once the guest returns to the owner and would like to regain access to the WLAN router 100 and to the Internet 20, respectively, the access is granted automatically without any activities of the owner itself.

Since the guest WAP 160 has been deactivated only the primary WAP 130 broadcasts periodically beacon frames including its SSID and MAC address. The guest WLAN device 30 is configured to passively scan the beacon frames from the primary WAP 130 and to transmit in step 209 a WLAN frame, i.e. a message, including for example the MAC address of the guest WLAN device 30, the MAC address of the primary WAP 130 , the second credentials associated with the guest WAP 160 which include at least the predetermined password. As it is stored before, after the accepted login with roaming, so the guest WLAN device 30 is not aware that the password is belonging to a different WLAN. The microcontroller 180 is configured to cause the WLAN router 100 to check in step 210 the content of the WLAN frame to decide whether the guest and the guest WLAN device 30, respectively, is allowed to get access to the primary WAP 130.

In the present case the microcontroller 180 detects that the guest and the guest WLAN device 30, respectively, is not allowed to get access to the primary WAP 130 but to the guest WAP 160 because the predetermined password does not match the stored router configuration data stored in memory 140. However, the microcontroller 180 further determines in response to the predetermines password, that the guest WLAN device 30 is to be roamed to the guest WAP 160. Since the guest WAP 160 is currently deactivated, the microcontroller 180 is configured to reactivate first the guest WAP 160 in step 212 and afterwards to initiate in step 213 the roaming of the guest WLAN device 30 to the guest WAP 160 by transmitting via the primary WAP 130 the SSID and the MAC address of the guest WLAP 160 to the guest WLAN device 30. The guest WLAN device 30 is thus configured to transmit, in response to the received MAC address of the guest WAP 160 a WLAN frame including the at least the MAC address of the guest WAP 160 and optionally its SSID to the guest WAP 160 in order to establish a wireless connection between the guest WLAN device 30 and the guest WAP 160.

In order to increase the security level the microcontroller 180 can be configured to cause when executing the stored instructions the WLAN router to check in step 211 prior to the reactivation of the guest WAP 160 whether the MAC address of the guest WLAN device 30 included in the WLAN frame matches a MAC address stored in memory 150. In this case the guest WAP 160 is only reactivated by the microcontroller 180 in step 212 if the second credentials matches the stored router configuration data and if the MAC address of the guest WLAN device 30 included in the WLAN frame matches a MAC address stored in memory 150. Alternatively, the microcontroller 180 can be configured to only check whether the MAC address of the guest WLAN device 30 include in the WLAN frame matches a MAC address stored in the memory 150 and to activate the guest WAP 160 if a match is determined. Once the guest WAP 160 is reactivated a wireless connection is established between the guest WLAN device 30 and the guest WAP 160 in step 214.

Now, the microcontroller 180 is further configured to deactivate or switch off the guest WAP 160 in step 215 again in response to a predetermined event, for example when the guest WAP 160 has not been used during a predetermined time after its reactivation. For example the guest drives home again and thus the guest WAP 160 is not used during a predetermined time period of 12 hours. The process of automatically deactivating and reactivating the guest WAP 160 by the microcontroller 180 and the WLAN router 100, respectively, can be repeated.

In order to keep the owner of the WLAN router 100 informed on the current state of the guest WLAP 160, the microcontroller 180 can be configured to cause the WLAN router 100 to transmit, if the guest WLAN client 30 is currently connected to the guest WLAN access point 160, a first information to a WLAN client of the primary person, e.g. the smartphone 50, indicating that the guest WLAN client 30 is currently connected to the guest WLAN access point 160, or to transmit, if the guest WLAN access point 160 has been deactivated, a second information to the WLAN client 50 of the primary person indicating that the guest WLAN access point 160 has been deactivated, or to transmit, if the guest WLAN access point 160 has been reactivated, a third information from the WLAN router 100 indicating that the guest WLAN access point 160 has been reactivated.

For example, these information can be transmitted by a local notification sent within the primary WAP 130 and/or a push notification using a cloud provider, which would reach the primary person's WLAN client 50 even outside the primary WAP 130 if at least having internet access.

## Claims

1. A method for controlling a guest access to a wireless local area network, WLAN, router (100), wherein a primary WLAN access point (130) and a guest WLAN access point (160) are implemented in the WLAN router (100), the primary WLAN access point (130) being activated and the guest WLAN access point (160) being deactivated, wherein first credentials only associated with the primary WLAN access point (130) and second credentials only associated with the guest WLAN access point (160) are stored in the WLAN router (100), the method comprising the following steps:
a) Activating the guest WLAN access point (160);
b) Entering, by a guest, the second credentials received from a primary person into a guest WLAN client (30);
c) Transmitting the second credentials from the guest WLAN client (30) to the WLAN router (100) and logging in of the guest to the guest WLAN access point (160) in response to the second credentials received;
d) Deactivating, by the WLAN router (100), the guest WLAN access point (160) in response to a predetermined event;
e) Transmitting a message from the guest WLAN client (30) to the WLAN router (100) and
reactivating, by the WLAN router (100), the guest WLAN access point (160) in response to the message received from the guest WLAN client.

2. The method of claim 1, comprising the further step:
f) Deactivating, by the WLAN router (100), the guest WLAN access point (160), when the guest WLAN access point (160) has not been used during a predetermined time after its reactivation in step e).

3. The method of claim 2, wherein
steps e) and f) are repeated.

4. The method of any one of the preceding claims, wherein
the first credentials include a first service set identifier, SSID, assigned to the primary WLAN access point (130) and the second credentials include a second SSID assigned to the guest WLAN access point (160), wherein the first SSID and the second SSID a different.

5. The method of any one of the preceding claims, wherein
step c) comprises the steps:
transmitting, by the guest WLAN client (30), a Media-Access-Control, MAC, address assigned to the guest WLAN client (30) together with the second credentials to the WLAN router (100), and storing, in the WLAN router (100),
the MAC address of the guest WLAN client (30), and wherein
step e) comprises the step of checking by the WLAN router (100) whether the MAC address of the guest WLAN client (30) transmitted in step c) is already stored in the WLAN router (100), and, if yes, reactivating by the WLAN router (100) the guest WLAN access point (160).

6. The method of any one of the preceding claims, wherein
step e) comprises the following steps:
- transmitting the message from the guest WLAN client (30) to the primary WLAN access point (130) of the WLAN router (100);
- in response to the message detecting, by the WLAN router, that the guest is not allowed to get access to the primary WLAN access point (130);
- checking, by the WLAN router (100) in response to the message, whether the guest is allowed to get access to the guest WLAN access point (160); and, if yes,
- reactivating, by the WLAN router (100, the guest WLAN access point (160).

7. The method of claim 4 or claims 4 and 5, wherein
step e) comprises the following steps:
- transmitting by the guest WLAN client (30) the message which includes the second SSID associated with the guest WLAN access point (160) to the WLAN router (100) in order to get access to the guest WLAN access point (160), which, however, is currently deactivated;
- checking by the WLAN router (100) in response to the message whether the second SSID included in the message matches the second credentials stored in the WLAN router; and, if yes,
- reactivating, by the WLAN router (100), the guest WLAN access point (160).

8. The method of any one of the claims 1 to 5, wherein
a predetermined password associated with the guest WLAN access point (160) is given to the guest, wherein
step c) comprises the following steps:
- transmitting the second credentials including the predetermined password from the guest WLAN client (30) to the primary WLAN access point (130) of the WLAN router (100);
- roaming, by the WLAN router (100), in response to the predetermined password the guest WLAN client (30) to the guest WLAN access point (160), and
- logging in the guest to the guest WLAN access point (160) by using the second credentials, and wherein
step e) comprises the following steps:
- transmitting the message including the second credentials which include the predetermined password from the guest WLAN client (30) to the primary WLAN access point (160) of the WLAN router (100);
- checking, by the WLAN router (100), the second credentials including the predetermined password to determine, whether the guest WLAN client (30) is allowed to get access to the guest WLAN access point (160), if yes,
- reactivating, by the WLAN router (100), the deactivated guest WLAN access point (160), and
- roaming, by the WLAN router (100) , in response to the predetermined password the guest WLAN client (30) to the activated guest WLAN access point (160).

9. The method of any one of the preceding claims, further comprising the steps:
transmitting, if the guest WLAN client is connected to the guest WLAN access point, a first information from the WLAN router to the WLAN client of the primary person indicating that the guest WLAN client is connected to the guest WLAN access point, or transmitting, if the guest WLAN access point has been deactivated, a second information from the WLAN router to the WLAN client of the primary person indicating that the guest WLAN access point has been deactivated, or
transmitting, if the guest WLAN access point has been reactivated, a third information from the WLAN router to the WLAN client of the primary person indicating that the guest WLAN access point has been reactivated.

10. The method of any one of the preceding claims, wherein
the message transmitted in step e) comprises the second credentials.

11. The method of any one of the preceding claims, wherein
after performing step e) the second credentials are transmitted again from the guest WLAN client (30) to the WLAN router (100) and the guest is logged in again to the guest WLAN access point (160) in response to the second credentials received.

12. A WLAN router (100) for controlling a guest access comprising:
a primary WLAN access point (130),
a guest WLAN access point (160),
a memory (140) configured to store first credentials only associated with the primary WLAN access point (130), second credentials only associated with the guest WLAN access point (160) , wherein a plurality of instructions are stored in the memory (140) or in a separate memory (150), and
a control unit (180) that is configured to cause when executing the instructions stored in the memory the WLAN router (100) to execute the method according to any one of the preceding claims.
